# EUROPÄISCHE PATENTANMELDUNG

(11) **EP 3 178 595 A1**
(43) Veröffentlichungstag der Anmeldung: **14.06.2017**
(21) Anmeldenummer: 15003522.8
(22) Anmeldetag: 10.12.2015
(51) Int. Cl.: B23K 9/00, B23K 9/18, B23K 9/32, B23K 37/00, B23K 20/12

(54) **VERFAHREN ZUM SCHWEISSEN UND/ODER BESCHICHTEN MITTELS EINES LICHTBOGENS**

(71) Anmelder: Linde Aktiengesellschaft, 80331 München (DE)
(72) Erfinder: SIEWERT, Erwan, 85283 Niederlauterbach (DE)
(74) Vertreter: Gellner, Bernd

(57) **Zusammenfassung**

Die Erfindung betrifft ein Verfahren zum Schweißen und/oder Beschichten mittels eines Lichtbogens (140), wobei der Lichtbogen (140) zwischen einer Elektrode (110) und einem Werkstück (200) brennt, wobei CO₂-Schnee oder ein CO₂-Schnee-Gemisch (160) derart zugeführt wird, dass zwischen der Elektrode (110) und dem Werkstück (200) eine Schicht (170) aus dem CO₂-Schnee oder dem CO₂-Schnee-Gemisch (160) erzeugt wird, in welcher der Lichtbogen (140) brennt.

## Beschreibung

Die Erfindung betrifft ein Verfahren zum Schweißen und/oder Beschichten mittels eines Lichtbogens, wobei der Lichtbogen zwischen einer Elektrode und einem Werkstück brennt, sowie einen entsprechenden Brenner zum Schweißen und/oder Beschichten.

### Stand der Technik

Das Unterpulverschweißen (Prozess 12 gemäß der Norm EN ISO 4063) ist ein Lichtbogenschweißverfahren, bei dem ein Lichtbogen unsichtbar zwischen einer endlosen Elektrode und einem Werkstück brennt. Der Lichtbogen und das Schmelzbad sind durch ein körniges Pulver bedeckt. Ein Schutz der Schweißzone vor dem Einfluss der Atmosphäre besteht durch eine aus dem Pulver gebildete Schlacke. Die auf der Schweißnaht ausgebildete Schlacke schützt die heiße Schweißnaht vor der Reaktion mit atmosphärischen Gasen und führt zu einer langsamen Abkühlung. Das Pulver verdampft teilweise, so dass sich eine Kaverne ausbildet, welche den Lichtbogen und die Schmelze vor atmosphärischen Einflüssen schützt. Gemäß der Norm DIN EN 760 kann das Pulver zudem verschiedene Elemente enthalten, um die Schweißnaht metallurgisch zu beeinflussen.

Das Unterpulverschweißen ist ein etabliertes Fügeverfahren und kann zum Fügen von dicken Bauteilen und insbesondere bei langen Schweißnähten eingesetzt werden. Das Unterpulverschweißen kann zumeist nur in der Wannenlage oder mit Pulverabstützung auch in der Querposition eingesetzt werden. Das Unterpulverschweißen kann sowohl zum Verbindungsschweißen als auch zum Auftragen von Verschleiß- und Korrosionsschutzschichten eingesetzt werden. Unlegierte und legierte Stähle sowie Chrom-Nickel-Stähle können verschweißt werden. Anwendungsfälle des Unterpulverschweißens sind vielfältiger Natur und reichen vom Schiffbau über den Brücken- und Stahlbau bis zur Behälterfertigung.

Jedoch ist das Unterpulverschweißen auch mit einigen Nachteilen behaftet: Nicht aufgeschmolzenes Pulver muss gegebenenfalls wieder abgesaugt werden. Die fest anhaftende Schlacke muss gegebenenfalls aufwendig entfernt werden. Es kann zu Einschlüssen von Pulver in der Schweißnaht kommen. Bei Mehrlagenschweißungen muss die Wurzel unter Umständen ausgearbeitet werden, z.B. durch Fugen oder Schleifen, bevor die Gegenlage geschweißt werden kann. Es kann zur unkontrollierbaren Interaktion des Lichtbogens mit der Kavernenwand und damit zu Prozessinstabilitäten kommen. Das Schweißpulver kann Feuchtigkeit aufnehmen, so dass unerwünschter Wasserstoff in das Schweißgut gelangen kann, was zum Bruch der Verbindung führen kann. Das Pulver kann eine Quelle für die Verunreinigung der Fertigung darstellen. Es besteht die Gefahr, dass zu viel Energie in das Werkstück eingebracht wird und dass somit die mechanischen Eigenschaften des Werkstücks negativ beeinflusst werden. Weiterhin kann das Unterpulverschweißen zumeist nur vollautomatisiert eingesetzt werden und ist daher nur sehr bedingt flexibel und portabel.

Bei alternativen Schweißverfahren ohne Verwendung von Pulver können zumeist nur sehr viel geringere Abschmelzleistungen erreicht werden, als beim Unterpulverschweißen. Beispielsweise wird beim Metallschutzgasschweißen anstatt eines Pulvers ein Schutzgasgemisch zum Schutz vor atmosphärischen Gasen und zur Beeinflussung der Prozesseigenschaften eingesetzt. Derartige Schweißverfahren besitzen zwar zumeist eine höhere Flexibilität als das Unterpulverschweißen und können beispielsweise sowohl automatisiert als auch manuell durchgeführt werden. Allerdings weisen derartige Schweißverfahren auch erhebliche Nachteile im Vergleich zum Unterpulverschweißen auf.

Wenn derartige Schweißverfahren beispielsweise im Freien eingesetzt werden, muss der entsprechende Arbeitsplatz unter Umständen komplett eingehaust werden, da die Schutzgasabdeckung durch Wind bzw. Zugluft beeinträchtigt werden kann. Darüber hinaus werden bei derartigen Schweißverfahren zumeist große Mengen von oftmals gesundheitsschädlichen Emissionen freigesetzt, was zu einem erheblichen Gesundheitsrisiko für den Schweißer führen kann. Im Gegensatz dazu ist das Unterpulverschweißen ein weitestgehend emissionsfreies Schweißverfahren, da Rauch und andere Emissionen von der Pulverschicht um den Lichtbogen herum zurückgehalten werden. Weiterhin können durch das Pulverschweißverfahren möglichst spritzerfreie Schweißnähte sehr hoher Qualität erzielt werden, was bei alternativen Schweißverfahren zumeist nicht ohne weiteres möglich ist.

Es ist wünschenswert, ein Verschweißen bzw. Beschichten eines Werkstücks mittels eines Lichtbogens zu ermöglichen und dabei die Vorteile des Unterpulverschweißens ausnutzen zu können, aber ohne dabei die mit dem Unterpulverschweißen behafteten Nachteile in Kauf nehmen zu müssen.

### Offenbarung der Erfindung

Diese Aufgabe wird durch ein Verfahren zum Schweißen und/oder Beschichten mittels eines Lichtbogens sowie durch einen entsprechenden Brenner zum Schweißen und/oder Beschichten mit den Merkmalen der unabhängigen Patentansprüche gelöst. Vorteilhafte Ausgestaltungen sind Gegenstand der jeweiligen Unteransprüche sowie der nachfolgenden Beschreibung. Ausgestaltungen und Vorteile des erfindungsgemäßen Verfahrens sowie des erfindungsgemäßen Brenners ergeben sich aus der nachfolgenden Beschreibung in analoger Art und Weise.

Der Lichtbogen brennt zwischen einer Elektrode und einem zu schweißenden bzw. zu beschichtenden Werkstück. CO₂-Schnee oder ein CO₂-Schnee-Gemisch wird derart zugeführt, dass zwischen der Elektrode und dem Werkstück eine Schicht aus dem CO₂-Schnee oder dem CO₂-Schnee-Gemisch erzeugt wird, in welcher der Lichtbogen zumindest teilweise, insbesondere aber ganz, brennt. Die Elektrode ist insbesondere eine endlos nachgeführte, abschmelzende Elektrode.

Als CO₂-Schnee-Gemisch sei in diesem Zusammenhang ein Gemisch aus CO₂-Schnee und einem weiteren Werkstoff zu verstehen. Der CO₂-Schnee wird dabei insbesondere mit Elementen vermischt, welche die metallurgischen Eigenschaften des Schmelzbades beeinflussen.

Ein erfindungsgemäßer Brenner zum Schweißen und/oder Beschichten weist die Elektrode und eine Zufuhr von CO₂-Schnee oder CO₂-Schnee-Gemisch auf. Beispielsweise kann diese Zufuhr als eine um die Elektrode herum angeordnete Düse und/oder als Kokille ausgebildet sein.

Durch die Erfindung kann ein Werkstück mittels eines Lichtbogens verschweißt bzw. beschichtet werden und es können dabei die Vorteile eines Unterpulverschweißens erzeugt werden, ohne dessen Nachteile in Kauf nehmen zu müssen. Das Verfahren eignet sich beispielsweise zum Fügen von dicken Bauteilen und kann insbesondere bei langen Schweißnähten eingesetzt werden. Das Verfahren ist insbesondere nicht auf die Wannelage beschränkt und kann problemlos auch in der Querposition eingesetzt werden. Insbesondere können zur Zufuhr des CO₂-Schnees bzw. des CO₂-Schnee-Gemischs Komponenten eines Unterpulverschweißbrenners verwendet werden (beispielsweise Pulverförderer und Traktor).

Insbesondere wird durch die Verwendung des CO₂-Schnees und der Erzeugung der Schicht aus CO₂-Schnee bzw. CO₂-Schnee-Gemisch die Lichtbogenstabilität verbessert. Der CO₂-Schnee kühlt den nahtnahen Bereich und reduziert die Nachoxidation. Weiterhin können durch die Schicht der Lichtbogen und die Schmelze vor atmosphärischen Einflüssen geschützt werden. Auch die heiße Schweißnaht kann vor der Reaktion mit atmosphärischen Gasen geschützt werden und eine langsame Abkühlung kann erzeugt werden. Die Werkstückoberfläche wird durch den CO₂-Schnee gekühlt, wodurch die Nachoxidation der Werkstückoberfläche reduziert werden kann sowie Verzug und Festigkeitsverlust reduziert werden können.

Das erfindungsgemäße Schweißverfahren kann weiterhin problemlos im Freien und für manuelle Schweißungen eingesetzt werden, da es nicht empfindlich gegen Wind bzw. Zugluft ist. Insbesondere ist es daher nicht notwendig, einen entsprechenden der Arbeitsplatz einzuhausen.

Weiterhin handelt es sich um ein weitestgehend emissionsfreies Verfahren, da Rauch und weitere Emissionen des Scheißprozesses durch die Schicht aus CO₂-Schnee bzw. CO₂-Schnee-Gemisch aufgefangen bzw. zurückgehalten werden und nicht in den Atembereich des Schweißers gelangen können. Das Gesundheitsrisiko für den Schweißer kann somit möglichst gering gehalten werden, insbesondere in manuellen Schweißverfahren.

Der Prozess ist insbesondere sehr sauber, da insbesondere kein Pulver durch den Prozess freigesetzt wird. Es kann nicht zu Einschlüssen von Pulver in der Schweißnaht kommen. Insbesondere verdampft der CO₂-Schnee vollständig, so dass dieser nicht abgesaugt werden muss, wie es oftmals beim Pulver des Unterpulverschweißens der Fall ist. Insbesondere sublimiert der CO₂-Schnee nach der Anwendung direkt, so dass keine Rückstände auftreten. Insbesondere wird kein Personal für das Nachfüllen von Pulvers oder für das Reinigen der Schweißnaht benötigt. Weiterhin können möglichst spritzerfreie Schweißnähte sehr hoher Qualität erzeugt werden.

Insbesondere bildet sich keine Schlacke aus, die aufwendig entfernt werden muss. Demgemäß treten keine unkontrollierten Reaktionen mit der Schlacke oder der Kavernenwand auf. Bei Mehrlagenschweißen ist es nicht notwendig, dass die Wurzel bzw. die vorherige Raupe ausgearbeitet werden muss, z.B. durch Fugen oder Schleifen, bevor die Gegenlage oder nächste Lage geschweißt werden kann, wie es oftmals beim Unterpulverschweißen der Fall ist. Da CO₂-Schneepartikel kein Wasser enthalten, besteht nicht die Gefahr, dass unerwünschter Wasserstoff in das Schweißgut gelangen kann, wodurch ein Bruch der Verbindung vermieden werden kann.

Der CO₂-Schnee geht unter Zufuhr von Energie insbesondere übergangslos in den gasförmigen Zustand über, ohne zuvor flüssig zu werden (Sublimation). Das entstehende CO₂ schützt das Schmelzbad und den Lichtbogen vor atmosphärischen Einflüssen.

Vorteilhafterweise wird zusätzlich zu dem CO₂-Schnee ein pulverförmiger Werkstoff derart zugeführt, dass zwischen der Elektrode und dem Werkstück die Schicht, in welcher der Lichtbogen brennt, aus dem CO₂-Schnee und dem pulverförmigen Werkstoff erzeugt wird. Der CO₂-Schnee kann insbesondere vor der Zufuhr mit dem pulverförmigen Werkstoff vermischt werden. CO₂-Schnee und pulverförmiger Werkstoff können in diesem Fall gemeinsam zugeführt werden. Es ist jedoch auch denkbar, den CO₂-Schnee und den pulverförmigen Werkstoff separat zuzuführen. In diesem Fall vermischen sich CO₂-Schnee und pulverförmiger Werkstoff insbesondere erst in der Schicht zwischen Elektrode und Werkstück.

Es kann somit ein Pulver zugeführt werden, ohne dabei die mit dem Unterpulverschweißen behafteten Nachteile in Kauf nehmen zu müssen. Dadurch, dass der pulverförmige Werkstoff zusammen mit dem CO₂-Schnee zugeführt wird, besteht insbesondere nicht die Gefahr, dass Pulver unkontrolliert freigesetzt wird. Durch zweckmäßiges Einstellen der zugeführten Menge an pulverförmigem Werkstoff, insbesondere in Abhängigkeit von der Menge an zugeführtem CO₂-Schnee, kann es insbesondere nicht zu Einschlüssen von Pulver in der Schweißnaht kommen.

Eine Zusammensetzung des pulverförmigen Werkstoffs wird vorteilhafterweise in Abhängigkeit eines durchzuführenden Schweiß- und/oder Beschichtungsprozesses gewählt. Die spezielle Zusammensetzung des pulverförmigen Werkstoffs kann somit zweckmäßigerweise an die Schweißaufgabe angepasst werden. Der pulverförmige Werkstoff kann aus einzelnen Elementen bzw. Komponenten zusammengesetzt sein, welche durch eine Mischeinheit zusammengestellt wird. Vorzugsweise wird die Zusammensetzung des pulverförmigen Werkstoffs in Abhängigkeit von einem Material, einer Blechdicke, einer Art einer zu erzeugend der Verschleißschutzschicht, etc. gewählt.

Vorzugsweise wird die Zusammensetzung des pulverförmigen Werkstoffs während des Schweiß- und/oder Beschichtungsprozesses verändert. Somit können insbesondere gradierte Schichten erzeugt werden oder es können Anpassungen an sich verändernde Schweißbedingungen vorgenommen werden.

Vorzugsweise wird ein Material des Werkstücks als pulverförmiger Werkstoff oder dessen Bestandteil verwendet. Insbesondere wenn das Verfahren zum Schweißen eigesetzt wird, kann der CO₂-Schnee mit einem Pulver vermischt werden, das aus dem Material des zu schweißenden Werkstücks besteht oder dieses enthält.

Bevorzugt wird ein Material einer auf dem Werkstück zu erzeugenden Beschichtung als pulverförmiger Werkstoff oder dessen Bestandteil verwendet. Wird das Verfahren zum Beschichten und/oder Auftragsschweißen verwendet, kann der CO₂-Schnee mit Bestandteilen des Beschichtungswerkstoffs vermischt werden.

Vorteilhafterweise werden Mangan, Calcium, Zirkon, Aluminat und/oder Fluorid als pulverförmiger Werkstoff verwendet. Besonders bevorzugt kann als pulverförmiger Werkstoff ein Gemisch zugeführt werden, welches das Material des Werkstücks umfasst sowie Eisen, Chrom, Aluminium, Titan, Kohlenstoff, Bor, Silizium, Vanadium, Molybdän, Nickel, Mangan, Calcium, Zirkon, Aluminat, Fluorid und/oder andere zweckmäßige Werkstoffe.

Werden Verschleißschutzschichten oder hitzebeständige Schichten erzeugt kommen insbesondere Werkstoffe wie Wolfram, Titannitrid, Chrom, Hafnium, Tantal, Nitride, Karbide, Hartchrom, Nickel oder andere zweckmäßige Werkstoffe zum Einsatz.

Vorzugsweise wird flüssiges CO₂ expandiert, um den CO₂-Schnee zu erzeugen. Das CO₂ wird aus der Flüssigphase expandiert, wodurch sich feiner Schnee bildet. Der CO₂-Schnee kann somit insbesondere unmittelbar vor Verwendung erzeugt werden. Flüssiges CO₂ kann sehr leicht für einen längeren Zeitraum gelagert werden. Es nimmt insbesondere keine Feuchtigkeit auf und ruft somit nicht die Gefahr von Wasserstoffeinschlüssen im Schmelzbad auf. Das flüssige CO₂ kann beispielsweise in Steigrohrflaschen bei Umgebungstemperatur und bei einem Druck von ca. 60 bar gelagert werden oder auch in vakuumisolierten Tanks bei einer Temperatur von ca. -20°C und bei einem Druck von ca. 20 bar. Beispielsweise kann zum Erzeugen des CO₂-Schnees das von der Anmelderin vertriebene Verfahren "CRYOCLEAN snow" verwendet werden, bei welchem CO₂-Schneepartikel nach Bedarf aus flüssigem CO₂ hergestellt werden.

Vorteilhafterweise wird Trockeneis verwendet, um den CO₂-Schnee zu erzeugen. Das Trockeneis kann beispielsweise durch eine Fräse zu CO₂-Schnee zerkleinert werden. Trockeneis kann beispielsweise in Form von Trockeneispellets bereitgestellt werden.

Gemäß einer vorteilhaften Ausführung kann gasförmiges CO₂ und/oder verbleibender CO₂-Schnee hinter dem Lichtbogen in Bezug auf die Schweißrichtung abgesaugt werden. Hinter dem Prozess kann zu diesem Zweck eine geeignete Absaugung vorgesehen sein.

Vorzugsweise wird ein Draht oder ein Band als Elektrode verwendet. Beispielsweise kann ein einzelner Draht (Eindrahttechnik) oder auch eine Vielzahl von Drähten (Mehrdrahttechnik) als Elektrode verwendet werden. Analog kann ein einzelnes Band (Einbandtechnik) oder auch eine Vielzahl von Bändern (Mehrbandtechnik) als Elektrode verwendet werden.

Bevorzugt wird eine Massivdrahtelektrode oder eine Fülldrahtelektrode als Elektrode verwendet. Zusätzlich können insbesondere Schweißzusätze bzw. Zusatzwerkstoffe durch den Einsatz von Fülldrähten bereitgestellt werden.

Zum Bestromen der Elektrode und des Werkstücks kann Gleichstrom oder auch Wechselstrom verwendet werden. Besonders bevorzugt werden die Elektrode und das Werkstück mit Gleichstrom bestromt und die Elektrode wird als Anode verwendet.

Die Zufuhr des CO₂-Schnees bzw. des CO₂-Schnee-Gemischs ist vorteilhafterweise als Düse und/oder Kokille ausgebildet. Weiterhin kann über diese Zufuhr vorzugsweise ebenfalls der pulverförmige Werkstoff zugeführt werden. Die Zufuhr ist bevorzugt derart bemessen, dass sie sich bis zu dem Werkstück erstreckt, wodurch der CO₂-Schnee bzw. das CO₂-Schnee-Gemisch auf eine definierte Stelle auf dem Werkstück zugeführt werden kann. Vorteilhafterweise ist eine Kühlvorrichtung, insbesondere einer Wasserkühlung, für die Zufuhr vorgesehen, um diese zu kühlen.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Kurze Beschreibung der Zeichnung

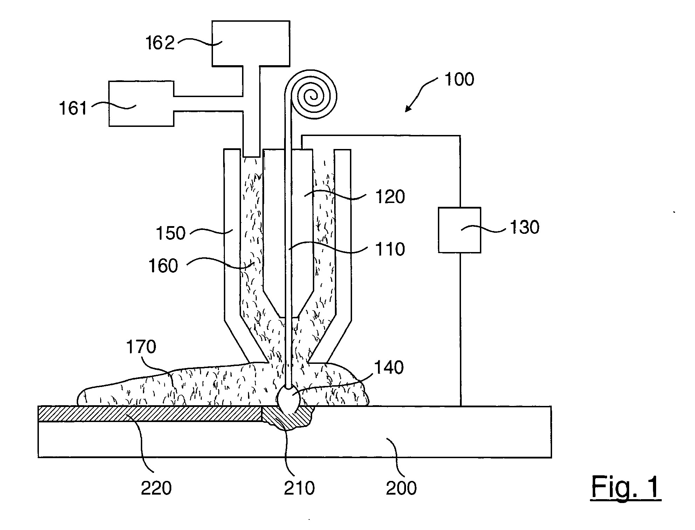

- Figur 1: zeigt schematisch eine bevorzugte Ausgestaltung eines erfindungsgemäßen Brenners, der dazu eingerichtet ist, eine bevorzugte Ausführungsform eines erfindungsgemäßen Verfahrens durchzuführen.

### Ausführungsform(en) der Erfindung

In Figur 1 ist eine bevorzugte Ausgestaltung eines erfindungsgemäßen Brenners zum Schweißen und/oder Beschichten schematisch dargestellt und mit 100 bezeichnet. Der Brenner 100 ist dazu eingerichtet, eine bevorzugte Ausführungsform eines erfindungsgemäßen Verfahrens durchzuführen. Der Brenner 100 wird in diesem Beispiel zum Schweißen eines Werkstückes 200 verwendet.

Der Brenner 100 umfasst eine endlos nachgeführte, abschmelzende Elektrode 110, beispielsweise in Form einer Drahtelektrode. Die Drahtelektrode 110 ist von einer Stromkontakthülse 120 umgeben. Über die Stromkontakthülse 120 wird ein Schweißstrom auf die Drahtelektrode 110 geführt. Die Stromkontakthülse 120 sowie das Werkstück 200 sind mit einer Schweißstromquelle 130 elektrisch verbunden. Beispielsweise können Elektrode 110 und Werkstück 200 mit Gleichstrom bestromt werden und die Elektrode 110 kann als Anode verwendet werden.

Zwischen einem lichtbogenseitigen Ende der Elektrode 110 und dem Werkstück 200 brennt ein Lichtbogen 140. Das Werkstück 200 wird durch die Einflüsse des Lichtbogens 140 zumindest teilweise aufgeschmolzen, wodurch ein Schmelzbad 210 erzeugt wird. Das erstarrte Schmelzbad bildet eine Schweißnaht 220.

Der Brenner 100 umfasst weiterhin eine Zufuhr 150 von CO₂-Schnee oder einem CO₂-Schnee-Gemisch. Beispielsweise kann eine spezielle Düse als Zufuhr 150 verwendet werden. Es ist auch denkbar eine Kokille als Zufuhr 150 zu verwenden. In diesem Beispiel wird ein Gemisch 160 aus CO₂-Schnee und einem pulverförmigen Werkstoff zugeführt.

Der CO₂-Schnee wird beispielsweise erzeugt, indem flüssiges CO₂ expandiert wird. Das flüssige CO₂ wird beispielsweise in einem vakuumisolierten Tank 161 bei einer Temperatur von ca. -20°C und bei einem Druck von ca. 20 bar gelagert.

In einem Tank 162 wird der pulverförmige Werkstoff gelagert. Beispielsweise wird ein Gemisch als pulverförmiger Werkstoff verwendet, welches das Material des Werkstücks 200 sowie Mangan umfasst.

Das CO₂-Schnee-Gemisch 160 wird über die Düse 150 derart zugeführt, dass zwischen der Elektrode 110 und dem Werkstück 200 eine Schicht 170 aus dem CO₂-Schnee-Gemisch 160 erzeugt wird. Der Lichtbogen 140 brennt in dieser Schicht 170. Der CO₂-Schnee in der Schicht 170 kühlt die Oberfläche des Werkstücks 200, insbesondere einen Bereich des Werkstücks 200 nahe der Schweißnaht 220 und reduziert Nachoxidation der Oberfläche des Werkstücks 200. Weiterhin können Verzug sowie Festigkeitsverlust der Oberfläche des Werkstücks 200 reduziert werden.

Durch die Energie des Lichtbogens 140 wird der CO₂-Schnee in der Nähe des Lichtbogens 140 zumindest teilweise sublimiert, wodurch sich gasförmiges CO₂ bildet. Das CO₂ schützt das Schmelzbad 210 und den Lichtbogen 140 vor atmosphärischen Einflüssen.

### Bezugszeichenliste

- 100: Brenner zum um Schweißen und/oder Beschichten
- 110: Elektrode, Drahtelektrode
- 120: Stromkontakthülse
- 130: Schweißstromquelle
- 140: Lichtbogen
- 150: Zufuhr von CO₂-Schnee oder einem CO₂-Schnee-Gemisch
- 160: CO₂-Schnee-Gemisch aus CO₂-Schnee und pulverförmigem Werkstoff
- 161: vakuumisolierten Tank zur Lagerung von flüssigem CO₂
- 162: Tank zur Lagerung des pulverförmigen Werkstoffs
- 170: Schicht aus CO₂-Schnee-Gemisch
- 200: Werkstück
- 210: Schmelzbad
- 220: Schweißnaht

## Patentansprüche

1. Verfahren zum Schweißen und/oder Beschichten mittels eines Lichtbogens (140), wobei der Lichtbogen (140) zwischen einer Elektrode (110) und einem Werkstück (200) brennt,
**dadurch gekennzeichnet, dass**
CO₂-Schnee oder ein CO₂-Schnee-Gemisch (160) derart zugeführt wird, dass zwischen der Elektrode (110) und dem Werkstück (200) eine Schicht (170) aus dem CO₂-Schnee oder dem CO₂-Schnee-Gemisch (160) erzeugt wird, in welcher der Lichtbogen (140) brennt.

2. Verfahren nach Anspruch 1, wobei zusätzlich zu dem CO₂-Schnee ein pulverförmiger Werkstoff zugeführt wird, um das CO₂-Schnee-Gemisch (160) zu erzeugen.

3. Verfahren nach Anspruch 2, wobei der pulverförmige Werkstoff ein Material des Werkstücks enthält oder daraus besteht und/oder wobei der pulverförmige Werkstoff ein Material einer auf dem Werkstück zu erzeugenden Beschichtung enthält oder daraus besteht.

4. Verfahren nach einem der Ansprüche 2 bis 3, wobei der pulverförmige Werkstoff Mangan, Calcium, Zirkon, Aluminat und/oder Fluorid enthält oder daraus besteht.

5. Verfahren nach einem der Ansprüche 2 bis 4, wobei eine Zusammensetzung des pulverförmigen Werkstoffs in Abhängigkeit eines durchzuführenden Schweiß- und/oder Beschichtungsprozesses gewählt wird.

6. Verfahren nach Anspruch 5, wobei die Zusammensetzung des pulverförmigen Werkstoffs während des Schweiß- und/oder Beschichtungsprozesses verändert wird.

7. Verfahren nach einem der vorstehenden Ansprüche, wobei flüssiges CO₂ expandiert wird, um den CO₂-Schnee zu erzeugen.

8. Verfahren nach einem der vorstehenden Ansprüche, wobei Trockeneis verwendet wird, um den CO₂-Schnee zu erzeugen.

9. Verfahren nach einem der vorstehenden Ansprüche, wobei gasförmiges CO₂ und/oder verbleibender CO₂-Schnee hinter dem Lichtbogen (140) in Bezug auf die Schweißrichtung abgesaugt werden.

10. Verfahren nach einem der vorstehenden Ansprüche, wobei ein Draht, ein Band, eine Massivdrahtelektrode oder eine Fülldrahtelektrode als Elektrode (110) verwendet wird.

11. Verfahren nach einem der vorstehenden Ansprüche, wobei die Elektrode (110) und das Werkstück (200) mit Gleichstrom bestromt werden und wobei die Elektrode (110) als Anode verwendet wird.

12. Brenner (100) zum Schweißen und/oder Beschichten mittels eines Lichtbogens (140), mit einer Elektrode (110) und einer Zufuhr (150) von CO₂-Schnee oder einem CO₂-Schnee-Gemisch (160), wobei der Brenner (100) dazu eingerichtet ist, ein Verfahren nach einem der vorstehenden Ansprüche durchzuführen.

13. Brenner (100) nach Anspruch 12, wobei die Zufuhr (150) als eine Düse und/oder als eine Kokille ausgebildet ist.

14. Brenner (100) nach Anspruch 12 oder 13 mit einer Kühlvorrichtung, insbesondere einer Wasserkühlung, für die Zufuhr (150).
